# EUROPEAN PATENT APPLICATION

(11) **EP 1 400 723 A2**
(43) Date of publication of application: **24.03.2004**
(21) Application number: 03077958.1
(22) Date of filing: 18.09.2003
(51) Int. Cl.: F16G 13/07

(54) **Sealed chain link assembly**

(30) Priority: 20.09.2002 US 412593 P
(71) Applicant: Rexnord Industries, Inc., Milwaukee, WI 53214 (US)
(72) Inventor: Schumacher, Jeffrey A., Port Washington, WI 53074 (US); Hansen, Kevin S., Grafton, WI 53024 (US)
(74) Representative: Prins, Adrianus Willem

(57) **Abstract**

A chain link assembly including a first link (12) pivotally joined to a second link (12) by a pin. The first link (12) has a pair of first sidebars (20) joined by a first barrel (24). Each first sidebar (20) includes first (22) and second (26) ends joined by an inner surface and an outer surface. The first ends (22) of each sidebar define coaxial first apertures (34) coaxial with the first barrel (24), and the second ends (26) define coaxial second apertures (38). A second link has a pair of second sidebars joined by a second barrel. Each second sidebar includes first and second ends joined by an inner surface and an outer surface. The second sidebar first ends define coaxial first apertures coaxial with the second barrel and the second apertures of the first link, and the second ends of the second sidebars define coaxial second apertures. A pin (16) extends through the first apertures (34) and first barrel (24) of the second link and the second apertures (38) of the first link to pivotally join the first link to the second link. In one embodiment, at least one of the links is formed from a single piece. In another embodiment, the pin (16) is rotationally fixed relative to one of the links.

## Description

### CROSS REFERENCES TO RELATED APPLICATIONS

This application claims the priority benefit of U.S. Provisional Patent Application No. 60/412,593 filed on September 20, 2002.

### STATEMENT REGARDING FEDERALLY SPONSORED RESEARCH

Not Applicable

### BACKGROUND OF THE INVENTION

The field of invention is chain assemblies, and in particular sealed chain assemblies having molded chain links suitable for use in liquid environments, such as water and wastewater treatment applications.

Power transmission devices incorporate chains to transfer the rotational motion of a rotating shaft into linear motion which can be retransferred into rotational motion of a sprocket. These power transmission chains typically include outer links that are pivotally connected to center links to form a continuous chain assembly having articulated joints. The outer and center links are joined together by a pin which extends through a bushing and apertures formed in the outer and center links, such as disclosed in U.S. Pat. No. 2,389,874 and 5,269,729. The pin and links are freely movable relative to each other about the connection pivot axis to provide the articulated joint.

Dirt and other fine abrasive material often works its way into the articulated joints which contributes significantly to chain wear and premature failure. Especially in liquid environments, such as found in water and wastewater treatment applications, the dirt and abrasive material work its way into the joint through passageways formed at the interface between the link assembly components, such as outer and center links, to contaminate the bushing.

Seals can be provided, such as disclosed in U.S. Pat. No. 2,389, 874 and 5,269, 729, between the outer and center links which inhibit the infiltration of abrasive materials into the articulated joint and retains lubricants in the bushing. These seals in combination with the outer and center links are difficult to assemble. Moreover, abrasive materials can still work their way into the joint through the aperture formed through the outer links for receiving the pin and/or a portion of the bushing. Even if abrasive material does not work its way into contact with the bushing, abrasive material between the freely rotating pin and the outer link can cause significant wear and premature failure.

In another chain assembly shown in U.S. Pat. No. 3,206,258, pairs of overlapping sidebars are provided which are pivotally joined together by a pin. A bushing is received in openings formed in each pair of the sidebars. The pin extends through the bushing to form an articulated joint that joins the pairs of sidebars together. A seal is provided at each end of the bushing which engages the bushing end and the pin to prevent dirt from passing between the pin and bushing. Unfortunately, the abrasive material can still contaminate moving interfaces between the freely rotating pin and apertures formed in the sidebars and the different pairs of sidebars. The relative movement of these components, in combination with the contaminating abrasive materials, can cause significant wear and premature failure. Accordingly, a need exists for an improved chain assembly.

### BRIEF SUMMARY OF THE INVENTION

The present invention provides a chain link assembly including a first link pivotally joined to a second link by a pin. The first link has a pair of first sidebars joined by a first barrel. Each first sidebar includes first and second ends joined by an inner surface and an outer surface. The first ends of each sidebar define coaxial first apertures coaxial with the first barrel, and the second ends define coaxial second apertures. A second link has a pair of second sidebars joined by a second barrel. Each second sidebar includes first and second ends joined by an inner surface and an outer surface. The second sidebar first ends define coaxial first apertures coaxial with the second barrel and the second apertures of the first link, and the second ends of the second sidebars define coaxial second apertures. A pin extends through the first apertures and first barrel of the second link and the second apertures of the first link to pivotally join the first link to the second link. In one embodiment, at least one of the links is formed from a single piece. In another embodiment, the pin is rotationally fixed relative to one of the links.

A general objective of the present invention is to provide a sealed chain assembly which is easily assembled. This objective is accomplished by providing a link formed from a single piece including sidebars joined by a barrel.

Another objective of the present invention is to provide a chain assembly having joined links that minimize passageways for contaminants between surfaces which move relative to each other. This objective is accomplished by preventing rotation of the pin connecting two links relative to one of the pins.

The foregoing and other objectives and advantages of the invention will appear from the following description. In the description, reference is made to the accompanying drawings which form a part hereof, and in which there is shown by way of illustration a preferred embodiment of the invention.

### BRIEF DESCRIPTION OF THE DRAWINGS

Fig. 1 is a perspective view of a partially assembled sealed chain assembly incorporating the present invention;

Fig. 2 is a top view of the chain assembly of Fig. 1;

Fig. 3 is a cross sectional view along line 3-3 of Fig. 1; and

Fig. 4 is a side view of an the assembled chain assembly of Fig. 1.

### DETAILED DESCRIPTION OF THE PREFERRED EMBODIMENTS

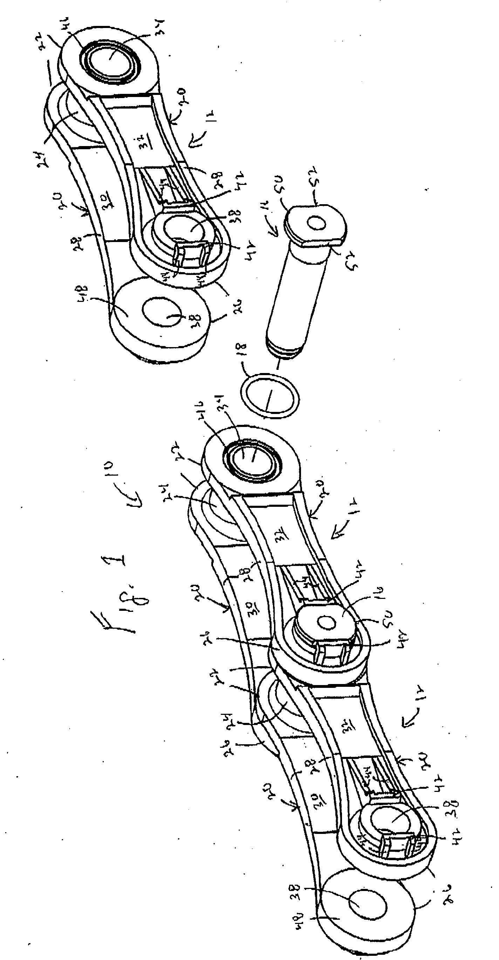

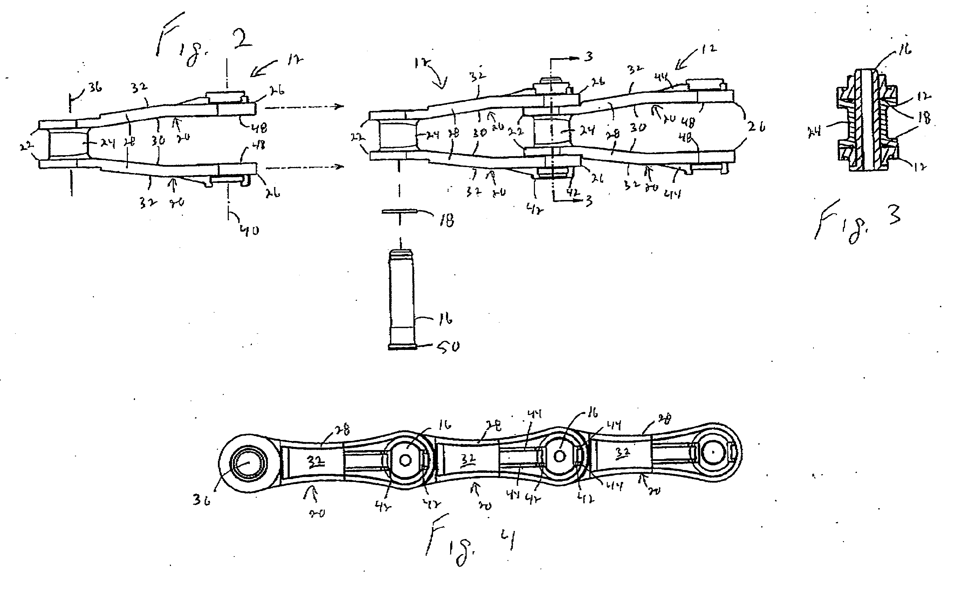

As shown in Figs. 1-4, a plurality of overlapping chain links 12 are pivotally joined together to form a chain assembly 10. Each link 12 is pivotally joined to an adjacent link 12 by a pin 16. The pin 16 is fixed relative to one of the joined links 12 to prevent unnecessary relative movement between the pin 16 and one joined link 12 that can cause premature wear. Sealing members 18 interposed between the adjacent links 12 seal the interfaces between adjacent links 12 to protect the pin 16 from contamination.

Each link 12 includes a pair of spaced apart sidebars 20 joined at a first end 22 by a barrel 24. Preferably, each link 12 is a single piece molded from a plastic material, such as acetal, polyethylene, polypropylene, nylon, and the like. Opposing second ends 26 of the sidebars 20 are spaced apart a distance sufficient to receive the first ends 22 of the adjacent link 12 therebetween. Advantageously, forming the sidebars 20 and barrel 24 as a single piece eliminates an interface between the barrel 24 and sidebars 20 which can be contaminated by abrasive material. Moreover, relative motion between the barrel 24 and sidebars 20 is also eliminated to prevent unnecessary wear therebetween.

Each sidebar 20 includes a body 28 having the first and second ends 22, 26 joined by an inner surface 30 and an outer surface 32. The inner surface 30 of one sidebar 20 faces the inner surface 30 of the other sidebar 20 of the link 12. The first ends 22 of each sidebar 20 define first apertures 34 having a common first axis 36. The barrel 24 joining the sidebars 20 is coaxial with the first apertures 34 for receiving the pin 16. The second ends 26 of each sidebar of the link 12 define second apertures 38 having a common second axis 40 which is substantially parallel to the first axis 36.

A pair of walls 42 proximal the edge of the second aperture 38 formed in each sidebar 20 extend axially away from the outer surface 32 of the sidebar 20 relative to the second aperture 38. Each wall 42 engages the pin 16 joining the adjacent links 12 to prevent rotation of the pin 16 relative to the sidebar 20 from which the engaged walls 42 extend. Ribs 44 are provided to support the walls 42 against deformation caused by forces exerted on the walls 42 by the pin 16.

The interface between joined links 12 is sealed by a sealing member 18 interposed between the sidebars 20 of adjacent links 12. The sealing member 18 is received in an annular receptacle 46 formed in the sidebar outer surface 32 of each link sidebar 20. The receptacle 46 surrounds the first aperture 34 formed through the sidebar 20, and receives the sealing member 18 to seal the interface between the adjacent link sidebars 20. Preferably, the annular receptacle 46 is radially spaced from the first aperture 34 to allow elongation of the first aperture 34 without disengaging the sealing member 18 from the adjacent link 12. Although the receptacle 46 is shown to be formed in the outer surface 32 of one sidebar 20 surrounding the first aperture 34 of the sidebar 20, the receptacle 46 can be formed in the inner surface 30 of the sidebar 20 surrounding the second aperture 38 without departing from the scope of the invention.

The sealing member 18 engages a substantially flat engagement surface 48 formed on the inner surface 30 of the adjacent link 12 facing the receptacle 46. The engagement surface 48 surrounds the second aperture 38 of the adjacent link 12 for sealing engagement with the sealing member 18. Advantageously, providing a substantially flat engagement surface 48 allows misalignment of the second apertures of the one link 12 with the first apertures 34 of the adjoining link 12 while maintaining the engagement of the sealing member 18 with the engagement surface 48. Of course, if the receptacle 46 is formed in the inner surface 30 of the sidebar 20, the engagement surface 48 is formed on the sidebar outer surface 32 of the adjacent link 12 facing the receptacle 47.

The sealing member 18 is received in the receptacle 46 and sandwiched between the sidebars 20 of adjacent links 12 to seal the interface between adjacent links 12. Preferably, the sealing member 18 is an O-ring formed from an elastomeric material, such as a thermoplastic, rubber, and the like. The sealing member 18 can be held in the receptacle 46 using a friction fit, adhesives, and the like. Alternatively, the sidebar 20 can be molded around the sealing member 18, or the sealing member 18 can be molded into the receptacle 46, to embed the sealing member 18 in the sidebar 20 and prevent separation of the sealing member 18 from the sidebar 20 to simplify assembly.

The pin 16 extends through the aligned first and second apertures 34, 38 of the joined links 12 and the barrel 24 joining the first apertures 34 to pivotally join the adjacent links 12. The pin 16 is retained in the coaxial second apertures 38 by a friction fit that prevents easy removal of the pin 16 from the barrel 24. Of course, other methods known in the art for retaining the pin 16 can be used, such as a cotter pin, retaining cap, snap fit, and the like, without departing from the scope of the invention.

The pin 16 includes a head 50 that slips between the walls 42 extending from the sidebar outer surface 32 proximal the second aperture 38. The head 50 includes substantially flat surfaces 52 that engage the walls 42 to prevent rotation of the pin 16 relative to the link 12 from which the engaged walls 42 extend. Although a pin 16 having a head 50 with flat surfaces 52 engaging the walls 42 is disclosed, any structure known in the art can be provided to prevent rotation of the pin relative to one of the links, such as a tooth extending from one of the pin and the sidebar which extends into a notch formed in the other of the pin and sidebar, without departing from the scope of the invention. Advantageously, fixing the pin 16 relative to the second apertures 38 to prevent relative movement of the pin 16 and second apertures 38 minimizes the infiltration of contaminants through the interface between the pin 16 and second apertures 38.

The chain assembly 10 is assembled by inserting the sealing member 18 into the receptacle 46, and then aligning the first apertures 34 and barrel 24 of one chain link 12 with the second apertures 38 of a second chain link 12. The pin 16 is then inserted through the aligned first and second apertures 34, 38 and barrel 24 to pivotally join the links 12 together.

In use, the sealing member 18 inhibits contaminants from working their way through the interface between sidebars 20 of adjacent links 12 and onto the pin 16 extending through the barrel 24. The nonrotating pin 16 extending through the second apertures 38 sealingly engages the second apertures 38 to inhibit contaminants from working their way through the second aperture 38 and into the barrel 24. Advantageously, radially spacing the sealing member 18 from the first aperture 34, allows elongation of the first aperture 34 without breaking the seal formed by the sealing member 18 engaging the engagement surface 48.

While there have been shown and described what is at present considered the preferred embodiments of the invention, it will be obvious to those skilled in the art that various changes and modifications can be made therein without departing from the scope of the invention defined by the appended claims.

## Claims

1. A sealed chain link assembly comprising:
a first molded single piece link having a pair of first sidebars joined by a first barrel, each first sidebar including first and second ends joined by an inner surface and an outer surface, said inner surface of one of said first sidebars facing the inner surface of the other of said first sidebars, said first ends defining coaxial first apertures coaxial with said first barrel, and said second ends defining coaxial second apertures, each first sidebar further including an annular receptacle formed in at least one of said inner surface and surrounding said second aperture and said outer surface and surrounding said first aperture;
a second molded single piece link having a pair of second sidebars joined by a second barrel, each second sidebar including first and second ends joined by an inner surface and an outer surface, said inner surface of one of said second sidebars facing the inner surface of the other of said second sidebars, said second sidebar first ends defining coaxial first apertures coaxial with said second barrel and said second apertures of said first link, and said second ends of said second sidebars defining coaxial second apertures coaxial with said first apertures of said first link, each second sidebar further including a substantially flat portion facing one of said annular receptacles formed in said one of said inner and outer surfaces of said first link;
a sealing member disposed in each of said receptacles and engaging said facing flat portion to seal the joint between said first and second links; and
a pin extending through said first apertures and first barrel of said first link and said second apertures of said second link to pivotally join said first link to said second link.

2. The sealed chain assembly as in claim 1, in which said sealing members are embedded in each of said sidebars.

3. The sealed chain assembly as in claim 1, in which said pin is rotatably fixed relative to.said second link.

4. The sealed chain assembly as in claim 3, including a wall extending axially from said outer wall adjacent said second aperture of at least one of said sidebars of said second link, said wall engaging said pin to prevent rotation of said pin relative to said second link.

5. The sealed chain assembly as in claim 3, in which said pin sealingly engages at least one of said second apertures of said second link.

6. The sealed chain assembly as in claim 1, in which said at least one of said first and second links is molded from a plastic material.

7. The sealed chain assembly as in claim 1, in which said annular receptacle is radially spaced from said aperture around which it surrounds.

8. A chain link assembly comprising:
a first link having a pair of first sidebars joined by a first barrel, each first sidebar including first and second ends joined by an inner surface and an outer surface, said inner surface of one of said first sidebars facing the inner surface of the other of said first sidebars, said first ends defining coaxial first apertures coaxial with said first barrel, and said second ends defining coaxial second apertures;
a second link having a pair of second sidebars joined by a second barrel, each second sidebar including first and second ends joined by an inner surface and an outer surface, said inner surface of one of said second sidebars facing the inner surface of the other of said second sidebars, said second sidebar first ends defining coaxial first apertures coaxial with said second barrel and said second apertures of said first link, and said second ends of said second sidebars defining coaxial second apertures coaxial with said first apertures of said first link; and
a pin extending through said first apertures and first barrel of said first link and said second apertures of said second link to pivotally join said first link to said second link, said pin rotatably fixed relative to said second link to prevent rotation of said pin relative to said second link.

9. The chain link assembly as in claim 8, in which each first sidebar includes an annular receptacle formed in at least one of said inner surface and surrounding said second aperture and said outer surface and surrounding said first aperture, and a sealing member is disposed in said receptacle and engages a flat surface formed on said second link to seal the joint between said first and second links.

10. The chain assembly as in claim 9, in which said sealing members are embedded in each of said sidebars.

11. The sealed chain assembly as in claim 9, in which said annular receptacle is radially spaced from said aperture around which it surrounds.

12. The sealed chain assembly as in claim 8, including a wall extending axially from said outer wall adjacent said second aperture of at least one of said sidebars of said second link, said wall engaging said pin to prevent rotation of said pin relative to said second link.

13. The sealed chain assembly as in claim 8, in which said pin sealingly engages at least one of said second apertures of said second link.

14. The sealed chain assembly as in claim 8, in which at least one of said first and second links is molded as a single piece from a plastic material.

15. A chain link assembly comprising:
a first link having a pair of first sidebars joined by a first barrel, each first sidebar including first and second ends joined by an inner surface and an outer surface, said inner surface of one of said first sidebars facing the inner surface of the other of said first sidebars, said first ends defining coaxial first apertures coaxial with said first barrel, and said second ends defining coaxial second apertures, each first sidebar further including an annular receptacle formed in at least one of said inner surface and surrounding said second aperture and said outer surface and surrounding said first aperture;
a second link having a pair of second sidebars joined by a second barrel, each second sidebar including first and second ends joined by an inner surface and an outer surface, said inner surface of one of said second sidebars facing the inner surface of the other of said second sidebars, said second sidebar first ends defining coaxial first apertures coaxial with said second barrel and said second apertures of said first link, and said second ends of said second sidebars defining coaxial second apertures coaxial with said first apertures of said first link, each second sidebar further including a substantially flat portion facing one of said annular receptacles formed in said one of said inner and outer surfaces of said first link;
a sealing member disposed in each of said receptacles and engaging said facing flat portion to seal the joint between said first and second links; and
a pin extending through said first apertures and first barrel of said first link and said second apertures of said second link to pivotally join said first link to said second link, said pin rotatably fixed relative to said second link to prevent rotation of said pin relative to said second link.

16. The chain assembly as in claim 15, in which said sealing members are embedded in each of said sidebars.

17. The sealed chain assembly as in claim 15, in which said annular receptacle is radially spaced from said aperture around which it surrounds.

18. The sealed chain assembly as in claim 15, including a wall extending axially from said outer wall adjacent said second aperture of at least one of said sidebars of said second link, said wall engaging said pin to prevent rotation of said pin relative to said second link.

19. The sealed chain assembly as in claim 15, in which said pin sealingly engages at least one of said second apertures of said second link.

20. The sealed chain assembly as in claim 15, in which at least one of said first and second links is molded as a single piece from a plastic material.
